# EUROPÄISCHE PATENTANMELDUNG

(11) **EP 1 705 062 A2**
(43) Veröffentlichungstag der Anmeldung: **27.09.2006**
(21) Anmeldenummer: 06002603.6
(22) Anmeldetag: 09.02.2006
(51) Int. Cl.: B60Q 9/00, B60Q 1/34

(54) **Schalteinrichtung mit einem Schalthebel, insbesondere für ein Fahrzeug**

(30) Priorität: 22.03.2005 DE 102005014111
(71) Anmelder: Valeo Schalter und Sensoren GmbH, 74321 Bietigheim-Bissingen (DE)
(72) Erfinder: Bosch, Jürgen, 86757 Wallerstein (DE); Gross, Michael, 74226 Nordheim (DE)
(74) Vertreter: Bulling, Alexander

(57) **Zusammenfassung**

Die Erfindung betriff eine Schalteinrichtung (10) mit einem Schalthebel (12), insbesondere für ein Fahrzeug, wobei der Schalthebel zur Aktivierung von Schaltvorgängen in unterschiedliche Schaltlagen auslenkbar ist sowie ein Verfahren hierfür.

Die Erfindung kennzeichnet sich dadurch, dass ein von einem Steuergerät (22) ansteuerbarer und den Schalthebel (12) zum Vibrieren bringenden Aktuator (20) vorgesehen ist, wobei das Steuergerät Eingangssignale von wenigstem einen anderen Steuergerät (24,26,28) erhält und daraus Setzbedingungen für ein zulässiges Auslenken des Schalthebels (12) bestimmt, und wobei der Aktuator dann vom Steuergerät (22) denn angesteuert wird, wenn der Schalthebel (12) aus seiner jeweiligen Schaltlage in eine die Setzbedingungen nicht erfüllende Schaltlage ausgelenkt wird.

## Beschreibung

Die Erfindung betrifft eine Schalteinrichtung mit einem Schalthebel, insbesondere für ein Fahrzeug, wobei der Schalthebel zur Aktivierung von Schaltvorgängen in unterschiedliche Schaltlagen auslenkbar ist. Die Erfindung betrifft außerdem ein Verfahren zum Betreiben einer solchen Schalteinrichtung.

Derartige Schalteinrichtungen sind in vielfältiger Art und Weise bekannt. Beispielsweise können derartige Schalteinrichtungen Lenkstockschalter sein, die einen Schalthebel aufweisen, mit dem Blinkvorgänge bei Fahrtrichtungswechseln eingeleitet werden. Ebenso sind Schalteinrichtungen bekannt, die einen Gangwahlhebel aufweisen, mit dem unterschiedliche Gänge eines Fahrzeuggetriebes eingelegt werden können.

Der vorliegenden Erfindung liegt die Aufgabe zugrunde, eine Schalteinrichtung der bekannten Art vorzuschlagen, bei der die Aktivierung von ungewollten Schaltvorgängen oder von Schaltvorgängen, die negative Auswirkungen haben können, verringert wird.

Diese Aufgabe wird mit einer Schalteinrichtung der eingangs genannten Art dadurch gelöst, dass ein von einem Steuergerät ansteuerbarer und den Schalthebel zum Vibrieren bringender Aktuator vorgesehen ist, wobei das Steuergerät Eingangssignale von wenigstens einem anderen Steuergerät erhält und daraus Setzbedingungen für ein zulässiges Auslenken des Schalthebels bestimmt, und wobei der Aktuator dann vom Steuergerät angesteuert wird, wenn der Schalthebel aus seiner jeweiligen Schaltlage in eine die Setzbedingungen nicht erfüllende Schaltlage ausgelenkt wird.

Hierdurch wird die Gefahr von Fehlschaltungen verringert, beziehungsweise es wird darauf aufmerksam gemacht, wenn ein Schaltvorgang eingeleitet wird, der unerwünschte Folgen haben könnte. Je nach Art des zu aktivierenden Schaltvorgangs können die Setzbedingungen verschieden sein. Das andere Steuergerät ist dabei vorteilhafterweise dem zu aktivierenden Schaltvorgang zugeordnet und liefert dem Steuergerät Eingangssignale, die es dem Steuergerät ermöglichen, festzustellen zu können, ob eine Schaltlage des Schalthebels die Setzbedingungen erfüllt und damit zulässig ist beziehungsweise die Setzbedingungen nicht erfüllt und damit ein Aktivieren des Aktuators beziehungsweise ein Vibrieren des Schalthebels zur Folge hat.

Vorteilhafterweise kann die Schalteinrichtung dabei ein Lenkstockschalter sein, wobei mit dem Schalthebel Blinkvorgänge bei Fahrtrichtungswechseln eingeleitet werden. Dies hat den Vorteil, dass bei Auslenken des Schalthebels zur Einleitung eines Fahrtrichtungswechsels der Fahrzeuglenker gewarnt werden kann, falls Setzbedingungen des Schalthebels in die ausgelenkte Lage nicht erfüllt sein sollten.

Vorteilhafterweise ist dabei das andere Steuergerät einem Totwinkelerfassungssystem zugeordnet, wobei der Aktuator dann angesteuert wird, wenn ein Fahrtrichtungswechsel eingeleitet wird, obwohl im Totwinkelbereich ein Objekt erfasst wird. Die Setzbedingungen sind folglich dann nicht erfüllt, wenn mit dem Schalthebel der Blinkvorgang bei Fahrtrichtungswechsel in die Richtung eingeleitet wird, in der sich ein Objekt im Totwinkelbereich befindet.

Ferner kann erfindungsgemäß vorgesehen sein, dass das andere Steuergerät zu einem Navigationssystem gehört und dass der Aktuator dann angesteuert wird, wenn ein Fahrtrichtungswechsel eingeleitet wird, obwohl ein Abbiegen an dieser Stelle nicht zulässig ist oder die vom Navigationssystem berechnete Route durch ein Abbiegen nicht eingehalten wird. Ein nicht zulässiges Abbiegen kann beispielsweise dann erfolgen, wenn gemäß dem Navigationssystem das Abbiegen in eine Einbahnstraße, entgegen der Fahrtrichtung der Einbahnstraße, eingeleitet wird.

Erfindungsgemäß kann die Schalteinrichtung auch ein Gangwahlhebel eines Getriebes sein, wobei mit dem Schalthebel unterschiedliche Gänge des Getriebes eingelegt werden können. Sollte beispielsweise in einen unzulässigen, das Getriebe und/oder den Motor gefährdenden Gang geschalten werden, so kann über ein Ansteuern des Aktuators davor gewarnt werden.

Vorteilhafterweise ist der Aktuator und/oder das Steuergerät innerhalb des Schalthebels angeordnet. Dies hat den Vorteil, dass der Schalthebel zusammen mit dem Aktuator und dem Steuergerät als zusammengehörende Einheit gehandhabt werden kann. Allerdings kann erfindungsgemäß auch vorgesehen sein, dass lediglich der Aktuator im Schalthebel angeordnet ist und dass das zugehörige Steuergerät in einem Schaltergehäuse oder Schaltermodul der Schalteinrichtung untergebracht ist.

Die eingangs genannte Aufgabe wird auch durch ein Verfahren nach Anspruch 8 und/oder zum Betreiben einer erfindungsgemäßen Schalteinrichtung gelöst.

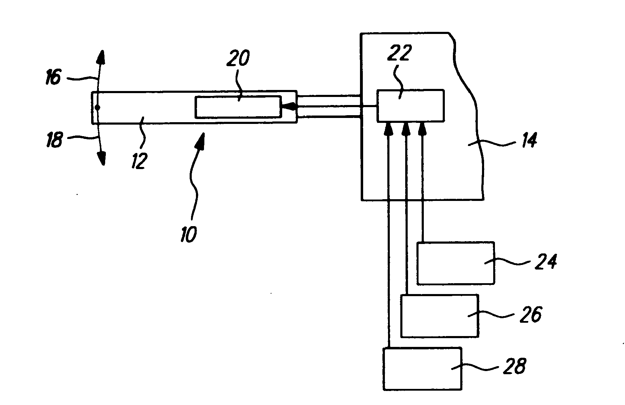

Weitere Merkmale und Einzelheiten der Erfindung sind der folgenden Beschreibung zu entnehmen, in der die Erfindung anhand des in der Figur dargestellten Ausführungsbeispiels näher beschrieben und erläutert ist.

In der Figur ist eine erfindungsgemäße Schalteinrichtung mit dem Bezugszeichen 10 gekennzeichnet. Die Schalteinrichtung umfasst einen Schalthebel 12, der an einem Gehäuse 14 auslenkbar angeordnet ist. Die Schalteinrichtung 10 kann dabei ein Lenkstockschalter sein, wobei mit dem Schalthebel 12 bei Auslenken in Richtung der Pfeile 16, 18 Blinkvorgänge für einen Fahrtrichtungswechsel eingeleitet werden können.

Im Schalthebel 12 ist ein Aktuator 20 angeordnet, der über ein Steuergerät 22 ansteuerbar und über den der Schalthebel 12 zum Vibrieren gebracht werden kann. Das Steuergerät 22 ist mit anderen Steuergeräten 24, 26, 28 derart verbunden, dass das Steuergerät 22 Eingangssignale von diesen Steuergeräten erhält. Aus den Eingangssignalen kann das Steuergerät 22 Setzbedingungen für ein zulässiges Auslenken des Schalthebels 12 bestimmen.

Wird der Schalthebel 12 nun von einer den Schalthebel betätigenden Person in eine die Setzbedingungen nicht erfüllende Schaltlage ausgelenkt, so wird der Aktuator 20 vom Steuergerät 22 angesteuert und der Schalthebel 12 vibriert. Dadurch wird die jeweilige Person darauf aufmerksam gemacht, dass der Schalthebel in eine unzulässige, unerwünschte oder mit unerwünschten Folgen verbundene Schaltlage gebracht wurde.

Bei dem Steuergerät 24 kann es sich um ein Steuergerät eines Totwinkelerfassungssystem handeln, das dem Steuergerät 22 mitteilt, ob ein Gegenstand in einem Totwinkelbereich vorhanden ist. Ist ein Gegenstand in einem Totwinkelbereich vorhanden und wird über den Schalthebel 12 ein Fahrtrichtungswechsel eingeleitet in die Richtung, in der das Objekt vorhanden ist, wird der Aktuator angesteuert. Der Fahrzeuglenker wird dann darauf hingewiesen, dass der Fahrtrichtungswechsel Gefahren mit sich bringen kann.

Das Steuergerät 26 kann beispielsweise zu einem Navigationssystem gehören. Das Steuergerät 22 steuert beispielsweise dann den Aktuator 20 an, wenn ein Fahrtrichtungswechsel durch Auslenken des Schalthebels 12 eingeleitet wird, obwohl ein Abbiegen an dieser_Stelle nicht zulässig ist oder die vom Navigationssystem berechnete Route durch ein Abbiegen nicht eingehalten wird. Der Fahrzeuglenker wird durch ein Vibrieren des Schalthebels 12 darauf aufmerksam gemacht, dass mit dem Abbiegen eine Gefahr verbunden ist beziehungsweise dass er von der berechneten Route abweicht.

Das Steuergerät 28 kann zu einem weiteren Fahrzeugsystem gehören, dessen Ausgangssignale als Eingangsignal des Steuergeräts 22 dienen.

## Patentansprüche

1. Schalteinrichtung (10) mit einem Schalthebel (12), insbesondere für ein Fahrzeug, wobei der Schalthebel (12) zur Aktivierung von Schaltvorgängen in unterschiedliche Schaltlagen auslenkbar ist, **dadurch gekennzeichnet, dass** ein von einem Steuergerät (22) ansteuerbarer und den Schalthebel (12) zum Vibrieren bringender Aktuator (20) vorgesehen ist, wobei das Steuergerät Eingangssignale von wenigstens einem anderen Steuergerät (24, 26, 28) erhält und daraus Setzbedingungen für ein zulässiges Auslenken des Schalthebels (12) bestimmt, und wobei der Aktuator (20) dann vom Steuergerät (22) denn angesteuert wird, wenn der Schalthebel (12) aus seiner jeweiligen Schaltlage in eine die Setzbedingungen nicht erfüllende Schaltlage ausgelenkt wird.

2. Schalteinrichtung (10) nach Anspruch 1, **dadurch gekennzeichnet, dass** die Schalteinrichtung ein Lenkstockschalter ist und dass mit dem Schalthebel (12) Blinkvorgänge bei Fahrtrichtungswechseln eingeleitetet werden.

3. Schalteinrichtung (10) nach Anspruch 2, **dadurch gekennzeichnet, dass** das andere Steuergerät (24) zu einem Totwinkelerfassungssystem gehört und dass der Aktuator dann angesteuert, wenn ein Fahrtrichtungswechsel eingeleitet wird, obwohl im Totwinkelbereich ein Objekt erfasst wird.

4. Schalteinrichtung (10) nach Anspruch 2, **dadurch gekennzeichnet, dass** das andere Steuergerät (26) zum einem Navigationssystem gehört und dass der Aktuator dann angesteuert wird, wenn ein Fahrtrichtungswechsel eingeleitet wird, obwohl ein Abbiegen an dieser Stelle nicht zulässig ist oder die vom Navigationssystem berechnete Route durch ein Abbiegen nicht eingehalten wird.

5. Schalteinrichtung (10) nach Anspruch 1, **dadurch gekennzeichnet, dass** die Schalteinrichtung ein Gangwahlhebel ist und dass mit dem Schalthebel unterschiedliche Gänge eine Getriebes eingelegt werden können.

6. Schalteinrichtung (10) nach Anspruch 5, **dadurch gekennzeichnet, dass** das andere Steuergerät zum dem Getriebe gehört und dass der Aktuator dann angesteuert wird, wenn ein Gangwechsel in einen unpassenden Gang eingeleitet wird.

7. Schalteinrichtung (10) nach einem der vorhergehenden Ansprüche, **dadurch gekennzeichnet, dass** der Aktuator und/oder das Steuergerät innerhalb des Schalthebels angeordnet ist.

8. Verfahren zum Bereiben einer Schalteinrichtung, insbesondere einer Schalteinrichtung (10) nach einem der vorhergehenden Ansprüche, **dadurch gekennzeichnet, dass** ein einen Schalthebel (12) zum Vibrieren bringenden Aktuator (20) von einem Steuergerät (22) dann angesteuert wird, wenn der Schalthebel aus seiner jeweiligen Schaltlage in eine Setzbedingungen nicht erfüllende Schaltlage ausgelenkt wird.

9. Verfahren nach Anspruch 8, **dadurch gekennzeichnet, dass** das Steuergerät (22) die Setzbedingungen aus Eingangssignalen von wenigstem einen anderen Steuergerät (24, 26, 28) bestimmt.
